# EUROPÄISCHE PATENTANMELDUNG

(11) **EP 1 584 637 A1**
(43) Veröffentlichungstag der Anmeldung: **12.10.2005**
(21) Anmeldenummer: 04008561.5
(22) Anmeldetag: 08.04.2004
(51) Int. Cl.: C08G 18/67, C09D 175/16, C08G 18/42

(54) **Strahlenhärtbares ungesättigtes Polyesterurethanharz**

(71) Anmelder: Surface Specialties Austria GmbH, 8402 Werndorf (AT)
(72) Erfinder: Lunzer, Florian Dr., 8010 Graz (AT); Awas, Rami-Raimund Dr., 8042 Graz (AT)
(74) Vertreter: Deckers, Hellmuth Alexander

(57) **Zusammenfassung**

Verzweigte Polyester **A** mit Hydroxylgruppen, Urethangruppen und olefinisch ungesättigten Gruppen, enthaltend Bausteine abgeleitet von Hydroxyverbindungen **A1** mit mindestens zwei Hydroxylgruppen, Carbonsäuren **A2** mit mindestens zwei Carbonsäuregruppen oder mit mindestens 3 Säuregruppen, von denen mindestens eine eine Carbonsäuregruppe ist, mehrfunktionellen Isocyanaten **A5** und olefinisch ungesättigten Hydroxyverbindungen **A6,** wobei gleichzeitig sowohl Säuregruppen enthaltende Bausteine **A2** mit einer Funktionalität von mehr als 2 und Hydroxylgruppen enthaltende Bausteine **A1** mit einer Funktionalität von mehr als 2 zugegen sein müssen, Verfahren zu ihrer Herstellung und ihre Verwendung in strahlenhärtbaren Bindemitteln zum Korrosionsschutz von metallischen Substraten sowie zum Schutz von Substraten ausgewählt aus Papier, Karton, Holz und Holzwerkstoffen

## Beschreibung

Die Erfindung betrifft ein strahlenhärtbares ungesättigtes Polyesterurethanharz. Sie betrifft weiter ein Verfahren zu dessen Herstellung und dessen Verwendung als Bindemittel für Beschichtungen insbesondere auf Metallen.

Strahlenhärtbare Harze auf Basis von Polyester-Acrylaten sind beispielsweise bekannt aus der EP-B 0 384 729. Gegenüber diesen Harzen besteht die Aufgabe, den Korrosionsschutz von Beschichtungen auf Basis solcher Harze auf unedlen Metallen zu verbessern, sowie die Haftung der Beschichtungen auf diesen Metallen insbesondere bei biegender Beanspruch zu verbessern.

Bei den Untersuchungen, die zu der vorliegenden Erfindung geführt haben, wurde festgestellt, daß bestimmte verzweigte Polyester **A** mit Hydroxylgruppen, Urethangruppen und olefinisch ungesättigten Gruppen in Kombination mit einem Reaktivverdünner als Basis für strahlenhärtbare Beschichtungsmittel eingesetzt werden können, die besonders gute Haftung auf Metallen ergeben und zu ausgezeichnetem Korrosionsschutz führen. Derartige Harze können mit Vorteil insbesondere für die Beschichtung von Stahlblechen benutzt werden (coil coating). Der Gehalt an olefinisch ungesättigten Gruppen in dem Reaktionsprodukt beträgt bevorzugt 0,2 mol/kg bis 2,5 mol/kg, besonders bevorzugt 0,5 mol/kg bis 2,0 mol/kg, bezogen auf die Masse des Reaktionsprodukts.

Der verzweigte Polyester **A** enthält Bausteine abgeleitet von Hydroxyverbindungen **A1** mit mindestens zwei Hydroxylgruppen, Carbonsäuren **A2** mit mindestens zwei Carbonsäuregruppen oder mit mindestens 3 Säuregruppen, von denen mindestens eine eine Carbonsäuregruppe ist, gegebenenfalls gesättigten aliphatischen oder aromatischen Monocarbonsäuren **A3** und gegebenenfalls Hydroxycarbonsäuren **A4**, wobei bei der Verwendung von Hydroxycarbonsäuren **A4** ganz oder teilweise auf die Verwendung von Hydroxyverbindungen **A1** und /oder Carbonsäuren **A2** verzichtet werden kann, mehrfunktionellen Isocyanaten **A5** und olefinisch ungesättigten Hydroxyverbindungen **A6**, wobei gleichzeitig sowohl Säuregruppen enthaltende Bausteine mit einer Funktionalität von mehr als 2 und Hydroxylgruppen enthaltende Bausteine mit einer Funktionalität von mehr als 2 zugegen sein müssen. Zur Verarbeitung wird diesen Harzen üblicherweise noch ein Reaktivverdünner zugesetzt, wobei ein Reaktivverdünner ein Lösungsmittel für den Polyester **A** ist und mindestens eine unter den Härtungsbedingungen reaktive Doppelbindung pro Molekül enthält.

Die Mengen der Bausteine **A1** bis **A6** werden bevorzugt so gewählt, daß der resultierende Polyester A eine Hydroxylzahl von 20 mg/g bis 200 mg/g aufweist. Bevorzugt beträgt der Stoffmengenanteil der Carbonsäuren **A2** mit mindestens drei Säuregruppen bezogen auf die Summe der Stoffmengen der Ausgangsstoffe für den Polyester von 0,01 mol/mol bis 0,3 mol/mol. Es ist weiter bevorzugt, daß der Stoffmengenanteil der Hydroxyverbindungen **A1** mit drei oder mehr Hydroxylgruppen bezogen auf die Summe der Stoffmengen der Ausgangsstoffe für den Polyester 0,01 mol/mol bis 0,3 mol/mol beträgt.

Die Hydroxyverbindungen **A1** sind aliphatische lineare, verzweigte oder cyclische Verbindungen mit mindestens zwei Hydroxylgruppen im Molekül und 2 bis 40 Kohlenstoffatomen. Bevorzugt werden unter den Diolen Glykol, 1,2- und 1,3-Propandiol, 1,2- und 1,4-Butandiol, 1,6-Hexandiol, Neopentylglykol, unter den höherwertigen Alkoholen Glycerin, Pentaerythrit, Erythrit, Sorbit, Mannit, Trimethyloläthan und -propan sowie Ditrimethylolpropan und Dipentaerythrit.

Die Carbonsäuren **A2** sind bevorzugt aliphatische lineare, verzweigte oder cyclische Säuren mit mindestens zwei Carbonsäuregruppen oder bevorzugt aromatische Säuren mit mindestens drei Säuregruppen, von denen mindestens eine eine Carboxylgruppe ist. Als aliphatische Säuren werden Adipinsäure und die isomeren Cyclohexandicarbonsäuren bevorzugt; als aromatische Säuren werden Trimellithsäure und deren Anhydrid sowie Sulfoisophthalsäure bevorzugt.

Die gegebenenfalls eingesetzten aliphatischen oder aromatischen Monocarbonsäuren **A3** sind bevorzugt Benzoesäure und Fettsäuren mit 8 bis 26 Kohlenstoffatomen.

Die gegebenenfalls eingesetzten Hydroxycarbonsäuren **A4** sind bevorzugt Ricinolfettsäure, Hydroxybuttersäure, Hydroxyvaleriansäure und Hydroxycapronsäure, unter den aromatischen Säuren werden p-Hyclioxybenzoesäure und 2-Hydroxy-6-naphthoesäure bevorzugt.

Geeignete olefinisch ungesättigte Hydroxyverbindungen **A6** weisen bevorzugt eine Hydroxylgruppe im Molekül und eine olefinisch ungesättigte Gruppe im Molekül auf. Bevorzugt sind Ester von mehrwertigen aliphatischen Alkoholen mit 2 bis 12 Kohlenstoffatomen **A61** und olefinisch ungesättigten Carbonsäuren **A62,** insbesondere Acrylsäure und Methacrylsäure. Besonders geeignet sind Hydroxyäthyl(meth)acrylat, die isomeren Hydroxypropyl(meth)acrylate, 4-Hydroxybutyl(meth)acrylat und 6-Hydroxyhexyl(meth)acrylat. Ebenso geeignet sind auch die Umsetzungsprodukte von aliphatischen Epoxidverbindungen wie beispielsweise Glycidylestern von aliphatischen Monocarbonsäuren oder Glycidyläthern von aliphatischen Monoalkoholen mit den genannten olefinisch ungesättigten Carbonsäuren.

Geeignete mehrfunktionelle Isocyanate für die Komponente **A5** sind aromatische oder aliphatische oder gemischt aliphatisch-aromatische Isocyanate, insbesondere Diisocyanate. Dabei sind Toluylendiisocyanat, Bis(4-isocyanatophenyl)methan, Hexamethylendiisocyanat, Isophorondiisocyanat und Tetramethylxylylendüsocyanat bevorzugt.

Die Erfindung betrifft weiter ein Verfahren zur Herstellung der erfindungsgemäßen Bindemittel, wobei
- in der ersten Stufe eine Polyester-Vorstufe hergestellt wird durch Kondensation der Hydroxyverbindungen **A1**, der Carbonsäuren **A2,** gegebenenfalls der gesättigten aliphatischen oder aromatischen Monocarbonsäuren **A3** und gegebenenfalls der Hydroxycarbonsäuren **A4**, erforderlichenfalls in Gegenwart eines Katalysators für die Veresterungsreaktion,
- in einer zweiten Stufe die Polyester-Vorstufe aus dem ersten Schritt mit einem olefinisch ungesättigten, Isocyanatgruppen enthaltenen Urethan **A56** zu dem Polyester **A** umgesetzt wird, wobei das Urethan **A56** erhältlich ist durch Reaktion von einem mehrfunktionellen Isocyanat **A5** mit einer mitderen Funktionalität von ν mit einer olefinisch ungesättigten Hydroxyverbindung **A6,** wobei deren Menge so gewählt wird, daß die Stoffmenge an Hydroxylgruppen in **A6** der (v - 1)fachen Stoffmenge des Isocyanats **A5** entspricht, und
- abschließend ein Reaktivverdünner zugesetzt wird.

Die Mischung von dem ungesättigten Polyesterurethanharz und dem Reaktivverdünner kann zu einem strahlenhärtbaren Lack formuliert werden; darunter wird ein Lack verstanden, der durch Einwirkung von energiereichem Licht oder Strahlung vernetzt. Dieser Lack kann in dünner Schicht von 1 µm bis zu 80 µm, bevorzugt bis zu 50 µm (Trockenschichtdicke) auf beliebige Substrate, bevorzugt auf Metalle, insbesondere unedle Metalle, aufgebracht werden. Zur Beschleunigung der Härtung durch energiereiches Licht oder Bestrahlung wird üblicherweise ein Photoinitiator zugesetzt.

Das beschichtete Substrat wird anschließend bestrahlt, durch UV-Licht oder durch Elektronenstrahlen, und dadurch gehärtet. Die ausgehärteten Beschichtungen zeigen eine ausgezeichnete Haftung auf dem Untergrund, insbesondere auf Metallen. Die so beschichteten Bleche lassen sich an derselben Stelle mehrfach um 90° biegen ohne Ablösung der Beschichtung. Daher sind die erfindungsgemäßen Beschichtungsmittel insbesondere zum Beschichten von Metallbändern (coil-coating) geeignet, die später durch Pressen, Tiefziehen oder Stanzen verformt werden. Ebenso sind die erfindungsgemäßen Bindemittel zum Beschichten von Holz, Holzwerkstoffen, Papier und Karton geeignet.

Die nachfolgenden Beispiele erläutern die Erfindung.

### Beispiele

### Beispiel 1

Durch Umsetzung von 1 mol Toluylendiisocyanat und 1 mol 2-Hydroxyäthylmethacrylat wurde ein ungesättigtes halbverkapptes Isocyanat bereitgestellt.

### Beispiel 2

2775 g Rizinusöl wurden gemeinsam mit 192 g Trimellithsäureanhydrid unter Zugabe von 3 g hypophosphoriger Säure auf 150 °C erhitzt. Dann wurden 1,5 g Dibutylzinndilaurat als Katalysator zugefügt. Zur Abtrennung des bei der Veresterung gebildeten Wassers wurden 300 g Xylol zugesetzt, und das Wasser unter Rückführung des Xylols azeotrop abdestilliert. Nach Entfernung des Lösungsmittels Xylol verbleiben ca. 2900 g des veresterten Rizinusöls.

### Beispiel 3

100 g des veresterten Rizinusöls aus Beispiel 2 wurden bei 80 °C unter Zusatz von einem Radikalfänger (Methylhydrochinon) mit 20 g des halbverkappten Isocyanats aus Beispiel 1 umgesetzt unter vollständigem Verbrauch der Isocyanatgruppen.

### Beispiel 4

Zu 70 g des Bindemittels aus Beispiel 3 wurden 30 g eines Reaktivverdünners (Dipropylenglykoldiacrylat), 5 g ®Darocure 1173 (Photoinitiator vom Benzophenontyp) und 5 g eines Haftungsverbesserungsmittels (®Additol VXL 6219, Surface Specialties Austria GmbH) gegeben. Die Mischung hatte eine Viskosität, gemessen bei 23 °C und einem Schergefälle von 25 s⁻¹, von 21,2 Pa·s.

Das Beschichtungsmittel wurde auf ein einseitig geschliffenes Rostschutzbonderblech (ST 1405) aufgetragen mit einer Naßfilmstärke von 50 µm. Die Härtung erfolgte durch Bestrahlung mit UV-Licht aus einer Quecksilberdampflampe (Leistung 80 W, 10 cm Abstand, 4 m/min Bandgeschwindigkeit).

Dabei ergab sich eine Erichsentiefung von 9 mm, ein Wert für den Erichsen-Schlagtest von 80 in·lb oder 9,04 J, und eine Beurteilung im Gitterschnitt von 0/0.
(1 in·lb = 25,4mm · 0,45359 kg · 9,81 m/s² = 113,0249 · 10⁻³ J = 0,1130249 J)

Auf einem Blech der Bezeichnung 26 S / 60 /OC mit einer Schichtdicke von ebenfalls 50 µm und der gleichen Härtung ergab sich ein Wert für die Erichsen-Tiefung von 9 mm, ein Wert im Erichsen-Schlagtest von 80 in·lb (9,04 J), und im Gitterschnitt-Test, wiederum die Bewertung 0/0. Beim Auftrag auf ein Blech der Qualität 26 S / 60 /OC mit einer Naßfilmdicke von 8 µm und Härtung wie oben ergab sich 8,5 mm für die Erichsentiefung, eine Wert im Erichsen-Schlagtest von 9,04 J und einen Bewertung im Gitterschnitt von 0/0. Die Beurteilung des T-Bend ergab T0, also einen hervorragenden Haftungswert.

Die Beschichtung wies einen ausgezeichnete Korrosionsschutz bereits in dünner Schicht auf. Mit einer Beschichtung von 8 µm (Trockenschichtdicke) auf einem Blech der Qualität 26 S/60/OC war im Salzsprühtest (DIN EN ISO 7253, entspricht ASTM B 117) nach 500 Stunden keine nennenswerte Schädigung des Blechs festzustellen.

Die Erichsen-Tiefung wurde gemäß der Norm DIN EN ISO 1520, der Gitterschnitt gemäß der Norm DIN EN ISO 2409 gemessen und ausgewertet. Die angegebene Tiefung ist die Verformung durch eine auftreffende Kugel (in mm), bei der der Lack noch nicht von der verformten Stelle abplatzt. Eine "0" im Gitterschnitt bedeutet, daß keines der durch gitterförmiges Einritzen des gehärteten Lacks entstandenen Quadrate nach Abdecken der Schnitte mit einem Klebeband und Abreißen desselben Einrißstellen zeigt.

Der Erichsen-Schlag-Test wird gemäß der ASTM-Norm D 2794 durchgeführt. Hier wird die Energie angegeben, die eine fallende Kugel hat, wobei sich die Lackschicht an der Ausbeulung (vom Kugelauftreffpunkt abgewandte Seite) noch nicht löst.

Der T-Bend wurde gemäß der Norm ASTM D 4145 bestimmt. Dabei bedeuten
- T0: keine Risse bei einer Biegung des Substrats um 180° und kein Haftungsverlust bei Abdecken der Biegestelle mit einem Klebeband und Abreißen desselben,
entsprechend bedeuten T1 usw. keine derartige Schädigungsmerkmale bei zweifacher, dreifacher etc. Biegung im Sinne einer flachen Wicklung jeweils um 180°. Dabei ist der Biegeradius der ersten Biegung selbstverständlich der geringste.

### Vergleichsbeispiel

Ein handelsübliches Polyesterurethan-Acrylatharz mit Trimethylolpropanformalacrylat als Reaktivverdünner (Festkörper-Massenanteil 55 %) wurden mit 5 g eines Photoinitiators (®Darocure 1173, Benzophenon-Typ) auf 100 g des reaktiwerdünnerhaltigen Bindemittels formuliert. Dabei ergab sich eine Viskosität bei 23 °C und 25 s⁻¹ von 7660 mPa·s.

Die Pendelhärte des Films (gemessen auf einer Glasplatte bei 50 µm Schichtdicke des Trockenfilms) betrug 24 h nach der Trocknung 33 s.

Mit diesem Vergleichslack wurde ein Rostschutz-Bonderblech (Stahlblech aus ST 1405, unbehandelt, einseitig geschliffen, Beispiel V1) und ein Stahlblech 26S/60/OC (aus ST 1405, spritzphosphatiert, Beispiel V2) beschichtet und bei 60 °C während 10 min getrocknet. Die Trockenfilmstärke war jeweils 50 µm. Auf ein weiteres Stahlblech der Qualität 26S/60/OC wurde ein Film mit einer Trockenfilmstärke von 8 µm aufgetragen (Beispiel V3).

Dabei wurde die folgenden Ergebnisse erhalten:

**Tabelle 1**

| mechanische Prüfung der beschichteten Bleche | | | |
|---|---|---|---|
| Beispiel | V1 | V2 | V3 |
| Erichsen-Tiefung in mm | 9 | 9,5 | 9 |
| Erichsen-Schlag in in lb in J | 80; 80 9,04;9,04 | 80; 80 9,04;9,04 | 80; 80 9,04;9,04 |
| Gitterschnitt | 0; 0 | 0; 0 | 0; 0 |
| T-Bend | 2T; 3T | 2T; 3T | 2T; 3T |
| (1 in·lb = 25,4 mm · 0,45359 kg · 9,81 m/s² = 113,0249 · 10⁻³ J = 0,1130249 J) | | | |

Während im Salzsprühtest nach 500 Stunden bei dem Vergleichslack gleichwertige Ergebnisse erzielt wurden wie bei dem Lack aus Beispiel 4, zeigte sich im T-Bend (T0 bei Beispiel 4) eine deutliche Verbesserung gegenüber den Lacken gemäß dem Vergleichsbeispiel.

## Patentansprüche

1. Verzweigte Polyester **A** mit Hydroxylgruppen, Urethangruppen und olefinisch ungesättigten Gruppen, enthaltend Bausteine abgeleitet von Hydroxyverbindungen **A1** mit mindestens zwei Hydroxylgruppen, Carbonsäuren **A2** mit mindestens zwei Carbonsäuregruppen oder mit mindestens 3 Säuregruppen, von denen mindestens eine eine Carbonsäuregruppe ist, mehrfunktionellen Isocyanaten **A5** und olefinisch ungesättigten Hydroxyverbindungen **A6,** wobei gleichzeitig sowohl Säuregruppen enthaltende Bausteine **A2** mit einer Funktionalität von mehr als 2 und Hydroxylgruppen enthaltende Bausteine **A1** mit einer Funktionalität von mehr als 2 zugegen sein müssen.

2. Verzweigte Polyester **A** nach Anspruch 1, **dadurch gekennzeichnet, daß** der Polyester zusätzlich Bausteine von gesättigten aliphatischen oder aromatischen Monocarbonsäuren **A3** enthält.

3. Verzweigte Polyester **A** nach Anspruch 1, **dadurch gekennzeichnet, daß** der Polyester zusätzlich Bausteine von Hydroxycarbonsäuren **A4** enthält.

4. Verzweigte Polyester **A** nach Anspruch 1, **dadurch gekennzeichnet, daß** der Stoffmengenanteil der Carbonsäuren **A2** mit mindestens drei Säuregruppen bezogen auf die Summe der Stoffmengen der Ausgangsstoffe für den Polyester von 0,01 mol/mol bis 0,3 mol/mol beträgt.

5. Verzweigte Polyester **A** nach Anspruch 1, **dadurch gekennzeichnet, daß** der Stoffmengenanteil der Hydroxyverbindungen **A1** mit drei oder mehr Hydroxylgruppen bezogen auf die Summe der Stoffmengen der Ausgangsstoffe für den Polyester 0,01 mol/mol bis 0,3 mol/mol beträgt.

6. Bindemittel für strahlenhärtbare Lacke, enthaltend einen Polyester **A** gemäß Anspruch 1.

7. Bindemittel für strahlenhärtbare Lacke, enthaltend einen Polyester **A** gemäß Anspruch 1 und mindestens einen Reaktivverdünner.

8. Verfahren zur Herstellung der Bindemittel gemäß Anspruch 7, wobei
- in der ersten Stufe eine Polyester-Vorstufe hergestellt wird durch Kondensation der Hydroxyverbindungen **A1,** der Carbonsäuren **A2,** gegebenenfalls der gesättigten aliphatischen oder aromatischen Monocarbonsäuren **A3** und gegebenenfalls der Hydroxycarbonsäuren **A4,** erforderlichenfalls in Gegenwart eines Katalysators für die Veresterungsreaktion,
- in einer zweiten Stufe die Polyester-Vorstufe aus dem ersten Schritt mit einem olefinisch ungesättigten, Isocyanatgruppen enthaltenen Urethan **A56** zu dem Polyester A umgesetzt wird, wobei das Urethan **A56** erhältlich ist durch Reaktion von einem mehrfunktionellen Isocyanat **A5** mit einer mittleren Funktionalität von ν mit einer olefinisch ungesättigten Hydroxyverbindung **A6**, wobei deren Menge so gewählt wird, daß die Stoffmenge an Hydroxylgruppen in **A6** der (v - 1)fachen Stoffmenge des Isocyanats **A5** entspricht, und
- abschließend ein Reaktivverdünner zugesetzt wird, der ein Lösungsmittel für den Polyester A ist und mindestens eine durch Einwirkung von energiereichem Licht oder Strahlung reaktive Doppelbindung pro Molekül enthält.

9. Verfahren zum Beschichten von Substraten, umfassend die Schritte des Auftragens des Bindemittels gemäß Anspruch 7 und des Härtens durch Einwirken von energiereichem Licht oder Strahlung, wobei die Substrate ausgewählt sind aus Papier, Karton, Holz, Holzwerkstoffen, Metallen, Metallblechen und Coils.

10. Substrate ausgewählt aus Papier, Karton, Holz, Holzwerkstoffen, Metallen, Metallblechen und Coils, mit einer Beschichtung hergestellt gemäß Anspruch 9.
